# EUROPEAN PATENT APPLICATION

(11) **EP 3 871 569 A1**
(43) Date of publication of application: **01.09.2021**
(21) Application number: 19809934.3
(22) Date of filing: 22.10.2019
(51) Int. Cl.: A47J 31/36, A47J 31/46

(54) **SYSTEM AND PROCESSES OF DISTRIBUTION OF EDIBLE PRODUCTS WITH SELECTIVE ACCESS ARRANGEMENTS**

(30) Priority: 23.10.2018 PT 2018115096
(71) Applicant: Novadelta-Comércio e Industria de Cafés, Lda., 1950-041 Lisboa (PT)
(72) Inventor: NABEIRO, Rui Miguel, 7370-112 Campo Maior (PT); MEDINA MUNDT, Jesús, 1800-098 Lisboa (PT); DE FIGUEIREDO BRANCO, João André, 1885-091 Moscavide (PT); GONÇALVES MARTINS, Marco Filipe, 2480-093 Pedreiras Pedreiras (PT)
(74) Representative: Ferreira Pinto, Francisca
(86) International application number: PCT/PT2019/050038
(87) International publication number: WO 2020/085930

(57) **Abstract**

The present invention discloses systems and processes of distribution of edible products, comprising an apparatus (1), in particular a beverage preparation apparatus (1), for example aromatic beverages such as espresso coffee and similar, that comprises a recipient placement disposition (2) adapted for placing a recipient (10, 10') of collection of edible product, and an apparatus casing (3) and an access disposition (4) whereby said access disposition (4) is adapted so that can provide selective access to said recipient placement disposition (2), for example for placing said recipient (10, 10').

## Description

### Field of the invention

The present invention refers to systems and processes for distribution of edible products, in particular including apparatuses of preparation of aromatic beverages by means of extraction of a respective edible substance, said apparatuses including beverage discharge means to the interior of a beverage recipient, in particular discharge means along a direction opposite to the direction of the gravity force.

### Background of the invention

The prior art presents several solutions of beverage discharge in beverage preparation machines.

In particular in the case of aromatic beverages such as for example espresso type coffee, this beverage discharge is a relevant process with potential impact on the beverage quality obtained in the recipient. In fact, in particular in the case of espresso type coffee, the main characteristics of the discharge flow determines several aspects as the production of creme and retention thereof inside the cup, and the variation of temperature as a result of the exposition to air during the discharge to the cup.

The document EP 2120652 B1 discloses a system of the type of the present invention, adapted for integration into an automobile vehicle. Said system seems to present a beverage discharge adapted so that a glass can be placed thereon and so that the beverage can be discharged through the base of said glass. In particular, said beverage discharge is provided in form of a valve of automatic actuation by the placement of the glass.

The document DE 2009 048233 A1 discloses a system of the type of the present invention whereby portions of edible substance are provided to a collection space by means of raising a lid-like disposition that comprises the beverage discharge means. This solution presents construction complexity and ergonomic constrains. Moreover, said lid-like disposition does not provide selective access to said beverage discharge means.

The document WO 2014/086915 A1 discloses a similar system whereby there seems to be an opening for introduction of portion of edible substance and a beverage discharge provided at a similar height. However, the document does not disclose a compact and ergonomic disposition of said elements.

The document WO 2015/084203 A1 filed by the author of the present application discloses a system for preparation of aromatic beverages with particularly reduced configuration and dimensions, so that provide advantages in terms of portability of the apparatus.

The document WO 2017/200409 A1 also filed by the author of the present application discloses a system for preparing aromatic beverages with an optimized beverage discharge disposition and also presenting advantageous configurations of the apparatus.

### General description of the invention

The objective of the present invention is to provide a system of distribution of edible products, in particular including an apparatus and a recipient that can be operatively placed on a recipient placement disposition of said apparatus, and presenting a discharge of edible product associated with said recipient placement disposition, in particular an upwards-oriented product discharge, said apparatus being adapted so as to provide selective access to the recipient placement disposition and respective edible product discharge, including through the cover thereof, so as to mitigate the accumulation of dusts and other dirt, as well as so as to provide a simpler construction, more compact and ergonomic, that minimizes the possibility of accumulation of dusts and makes easier cleaning the exterior.

This objective is attained according to the present invention by means of a system of distribution of edible products according to claim 1.

In particular, the objective above is solved by means of a system comprising an apparatus presenting an access disposition configured as at least part of the exterior envelope of the apparatus and that can provide selective access to said recipient placement disposition, including completely covering the recipient placement disposition and product discharge associated therewith, at least in case the recipient is not placed on said recipient placement disposition.

In particular, the access disposition is adapted so that confines the recipient placement disposition, and respective product discharge, relative to the exterior in case in the closed position, and provides placement of recipient, for example drinking recipient, on the placement disposition in case is in at least one other position, including in an open position.

The access disposition can present a lid-like shape, or similar, and can be adapted so that can be operated between a closed position and at least one non-closed position where provides access for placement of recipient on the placement disposition.

The access disposition can be associated with the apparatus casing and can be adapted so that can be operated between a closed position and an open position, in functional connection with the remaining apparatus casing.

The access disposition can be operated manually or by mechanical means.

Said access disposition can be configured as at least part of the exterior envelope of apparatus, can correspond to the only part of the exterior envelope of apparatus, or can form such exterior envelope together with a part of apparatus casing.

The access disposition and the apparatus casing can provide adjacent and concomitant exterior surfaces of exterior envelope, preferentially in a substantially continuous alignment and of at least one of similar material and similar visual aspect.

It is preferred when the access disposition and apparatus casing are the only two parts that form the exterior envelope of the apparatus.

The access disposition and apparatus casing can jointly provide at least most part of the material exterior envelope of said apparatus, preferentially the totality of the material exterior envelope directly exposed to the local environment.

Said access disposition can be provided as a planar-like shape, for example of lid type or similar, preferentially with a plane exterior surface devoid of openings, adapted so that can totally cover and provide access to said placement disposition, including possibility of placing a drinking recipient upon the product discharge associated with the recipient placement disposition.

The access disposition and apparatus casing can jointly configure at least part of a coherent geometry, or a set of at least part of coherent geometries, that preferentially corresponds at least approximately to the exterior envelope of said apparatus.

Said access disposition is devoid of any fluid passageway.

In the scope of the present invention, the expression "coherent geometry" is understood as the geometry of a regular volume, including cube, prisms, cones, pyramids, cylinders, and spheres.

The access disposition and apparatus casing can jointly define a reference surface of exterior envelope of the apparatus, both developing on a single plane and in substantially continuous manner, devoid of concavities or openings, preferentially at least part, more preferentially the totality of at least one region of apparatus visible to the user.

The access disposition and apparatus casing can jointly define a reference volume or a composition of reference volumes, of geometry or at least part of geometry, at least approximately regular, such as for example at least part of a cylinder, of a cube, of a cone frustum, of a pyramid frustum, or similar, along at least part, preferentially at least most part, particularly preferentially the totality the height of the exterior envelope of apparatus, preferentially along at least most part of the height of the apparatus casing, including the top region of the apparatus casing.

The apparatus casing can present a top region and a base region with a cross-section in top view of similar shape, including a square, a circle, whereby the dimension of at least one of said top and base regions is smaller than the other.

The apparatus casing can present a non-rectangular cross-section when seen in at least one of: side view, frontal view and top view.

The access disposition and apparatus casing can jointly configure volume geometry, in particular a volume of regular or concomitant shape, or a composition of volume geometries, that does not correspond to a regular parallelepiped.

The apparatus casing can configure at least approximately the exterior shape of the apparatus.

The apparatus casing can present at least one of two total dimensions and two similar dimensions of the apparatus, preferentially including at least one height and one width of the apparatus.

Said apparatus can present a recipient placement disposition adapted so that provides support for placement of at least one type of recipient for collection of said edible product, for example a drinking recipient, such as a glass or a cup. In particular, the recipient is adapted so that can be placed in operative manner, including so that can be retained on said recipient placement disposition and that said product can be discharged in a direction opposite to the gravity force.

The apparatus can present a discharge of edible product associated with said recipient placement disposition and adapted so as to inject said product, for example beverage, along the direction contrary the gravity force.

The apparatus can be adapted for preparing beverages, in particular of aromatic beverages such as for example espresso type coffee, based upon the injection of a fluid into an extraction device and mixture thereof with a corresponding portion of edible substance introduced through an introduction passageway, thereby generating residues that can be collected in a collection recipient that provides part of the apparatus casing.

The apparatus can present an introduction passageway for portions, adapted for collecting a portion of edible substance, optionally provided inside of a capsule, and in connection with said extraction device.

The apparatus can present a recipient placement disposition and an introduction passageway at least approximately on a common surface that develops along a single plane, preferentially on a surface of the envelope of the apparatus top part.

It is preferred when said apparatus top part only presents said recipient placement disposition and said introduction passageway for portions of edible substance.

Said top part of apparatus can present the access disposition, and is preferentially devoid of any other elements of interaction with or operation of the apparatus.

The access disposition can be provided so that can selectively cover the recipient placement disposition and the introduction passageway for portions.

### Description of the figures

The invention shall hereinafter be explained in greater detail based upon preferred embodiments and on the attached Figures.

The Figures show, in simplified schematic representations:
- Figure 1:: side and frontal views (right-hand side) of an apparatus (1) for preparing beverages of a system of the type of the present invention, according to prior art;
- Figure 2:: diagram of a drinking recipient (1) operatively placed on a placement disposition (2) operatively associated in fluid connection to an apparatus (3), according to prior art;
- Figure 3:: frontal and top views (right-hand side) of a first embodiment of an apparatus (1) for preparing beverages of a system according to the present invention, and with the access disposition (4) in a closed position;
- Figure 4:: side views of the embodiment according to Figure 3;
- Figure 5:: views corresponding to those of Figure 3, with the access disposition (4) in an open position of a first embodiment thereof;
- Figure 6:: views corresponding to those of Figure 3, with the access disposition (4) in an opening position of a second embodiment thereof;
- Figure 7:: front and top views (right-hand side) of a second embodiment of an apparatus (1) for preparing beverages of a system according to the present invention, and with the access disposition (4) in a closed position;
- Figure 8:: side views of the embodiment according to Figure 7;
- Figure 9:: views corresponding to those of Figure 7, with the access disposition (4) in an open condition of a first embodiment thereof;
- Figure 10:: views corresponding to those of Figure 7, with the access disposition (4) in a condition of first moment of opening of a second embodiment thereof;
- Figure 11:: views corresponding to those of Figure 10, in a condition of second instant of actuation of the access disposition (4);
- Figure 12:: views corresponding to those of Figure 10, in a condition of third instant of actuation of the access disposition (4);
- Figure 13:: views corresponding to those of Figure 10, in a condition of fourth instant of actuation of the access disposition (4);
- Figure 14:: front and top views (on the right-hand side) of a third embodiment of a beverage preparation apparatus (1) of a system according to the present invention, and with the access disposition (4) in a closed position;
- Figure 15:: side views of the embodiment according to Figure 14;
- Figure 16:: views corresponding to those of Figure 14, with the access disposition (4) at an open condition in a first embodiment thereof;
- Figure 17:: side and top views of another preferred embodiment of system according to the present invention, whereby the access disposition (4) is provided in a mechanism of diaphragm type, at a closed position;
- Figure 18:: side and top views of the embodiment according to Figure 17, with the access disposition (4) at an open position;
- Figure 19:: top views of an embodiment of the type of the one represented in Figure 17, in closed and open positions;
- Figure 20:: underneath and side views of the embodiment according to Figure 19;
- Figure 21:: exploded perspective view from below of the embodiment according to Figure 19;
- Figure 22:: exploded perspective view from below of the embodiment according to Figure 19;
- Figure 23:: side and top views of another preferred embodiment of the system according to the present invention;

| | |
|---|---|
| Figure 24: | side and top views of another preferred embodiment of the system according to the present invention; |
| Figure 25: | flow diagram of embodiment of a process according to the invention; |
| Figure 26: | flow diagram of embodiment of a process according to the invention; |
| Figure 27: | side and front views (on the right-hand side) of another preferred embodiment of a system according to the invention, in a closed position; |
| Figure 28: | side and front views (on the right-hand side) of another preferred embodiment of a system according to the invention, in an open position. |

### Detailed description of preferred embodiments of the invention

In the case of the embodiment described hereinafter and that corresponds to a preferred embodiment of the invention, without exclusion of other in the scope thereof, the apparatus of distribution of edible products, is a beverage preparation apparatus (1), for example of espresso coffee, based upon a portion (7) of edible substance, for example roasted and ground coffee, that is impinged by a pressurized fluid in a product preparation device (5), for example an extraction device that can be actuated between an open and closed position, and vice-versa, and of which results a beverage flow that is discharged to a product recipient (10, 10'), in this case a drinking recipient, operatively placed in a recipient placement disposition (2).

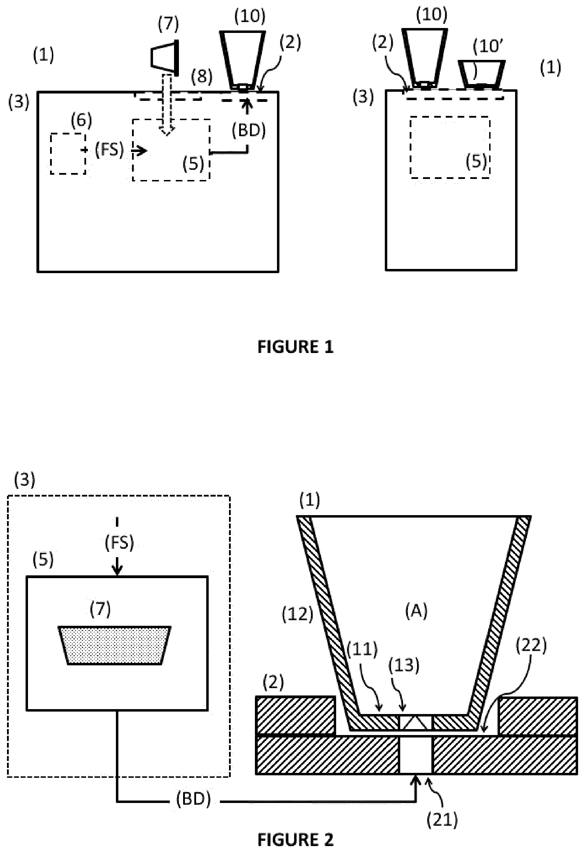

**Figure 1** represents side view (on the left-side of the drawing) and front view of an apparatus (1) for preparing beverages of a system of the type of the present invention, including recipients (10, 10') operatively placed on a placement disposition (2) of said apparatus (1), whereas **Figure 2** represents a functional diagram of discharge of edible product (BD) in a system of the type of the present invention.

As represented, said apparatus (1) presents an extraction device (5), in this case provided inside of the apparatus casing (3) of said apparatus (1), whereby said extraction device (5) is provided so that can collect a portion (7) of beverage precursor edible substance, eventually contained inside of a capsule.

Said apparatus (1) further presents at least one introduction passageway (8) that provides the supply of said portion (7) of edible substance to said extraction device (5).

Moreover, said apparatus (1) can include a fluid reservoir (not represented), as well as a fluid pressurization device (6) and a fluid heating device (not represented), so that can supply a flow (FS) at a temperature comprised between 60 and 100 °C and at a pressure comprised between 1 e 20 bar, so as to interact with said edible substance. These means are known to the skilled in the art so that one herewith abdicates from a more detailed representation or description thereof.

After extraction of the beverage, the beverage discharge flow (BD) is conducted to an exit of said extraction device (5) and to a placement disposition (2) that includes a beverage discharge (21) disposed downstream thereof so that the beverage discharge to the interior of the beverage recipient (10, 10') unfolds through said base zone (11) thereof.

The recipient (10, 10') can present flow regulation means (13) disposed in a base portion (11) thereof an adapted so that only provide flow entry into said recipient if the flow pressure is bigger than a previously defined flow pressure.

The placement disposition (2) can present at least one of:
- a beverage discharge device (21) that includes at least one flow exit generally oriented upwards, whereby said beverage discharge device (21) is functionally connected with the extraction device (5) by means of a tube, preferentially of flexible type;
- a recipient placement surface (22) adapted for placement of at least one type of recipient (10, 10'), preferentially at least two types of recipient (10, 10') presenting at least one of different dimensions and different configurations;
- engagement means (23) associated with said recipient placement surface (22) and adapted so that provide removable retention of the recipient (10, 10') on said placement disposition (2).

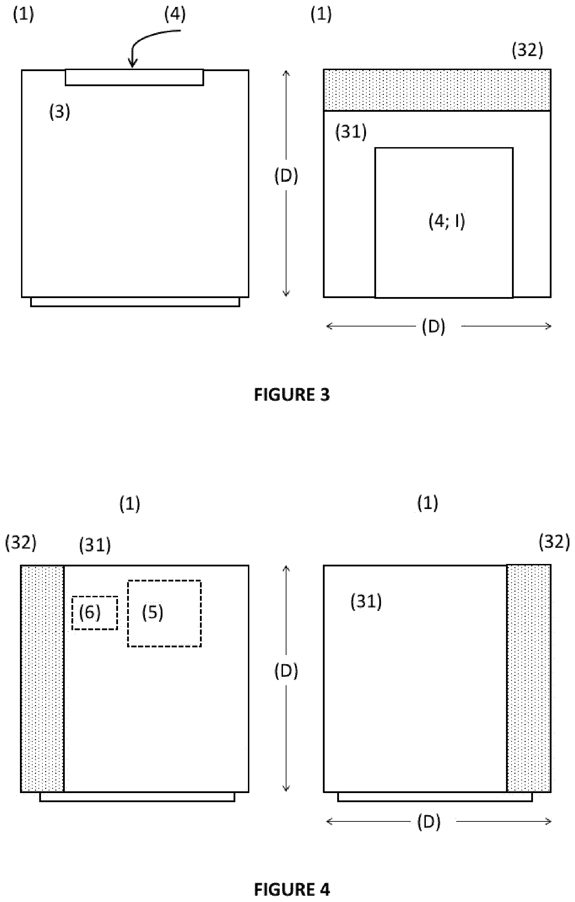

**Figures 3** to **6** represent a first embodiment of a system of the type of Figures 1 and 2, and according to the present invention.

As represented, the apparatus (1) in this case presents an apparatus casing (3) and an access disposition (4) that jointly define, at least substantially, the volume geometry of the apparatus (1), in particular in a coherent geometry that in this case corresponds at least approximately to a cube.

Advantageously, said access disposition (4) provides selective access to said placement disposition (2) and product discharge (21), so that prevents the possibility of accumulation of dusts and other residues as a result of exposition to ambient air of a given location of use of the apparatus (1).

It is particularly preferred, when the product discharge (21) is herewith selectively confined with relation to the exterior of the apparatus (1), so that the possibility of contamination thereof is mitigated.

Moreover, said apparatus casing (3) and access disposition (4) jointly define a material volume that is preferentially substantially continuous, devoid of projection or cavities.

According to a particularly advantageous aspect, said apparatus casing (3) and access disposition (4) jointly configure a volume that at least approximately corresponds to a coherent geometry, in particular regular, including a cube, a cone frustum, whereby said volume is devoid of projections or cavities, at least in case said access disposition (4) is at a closed position.

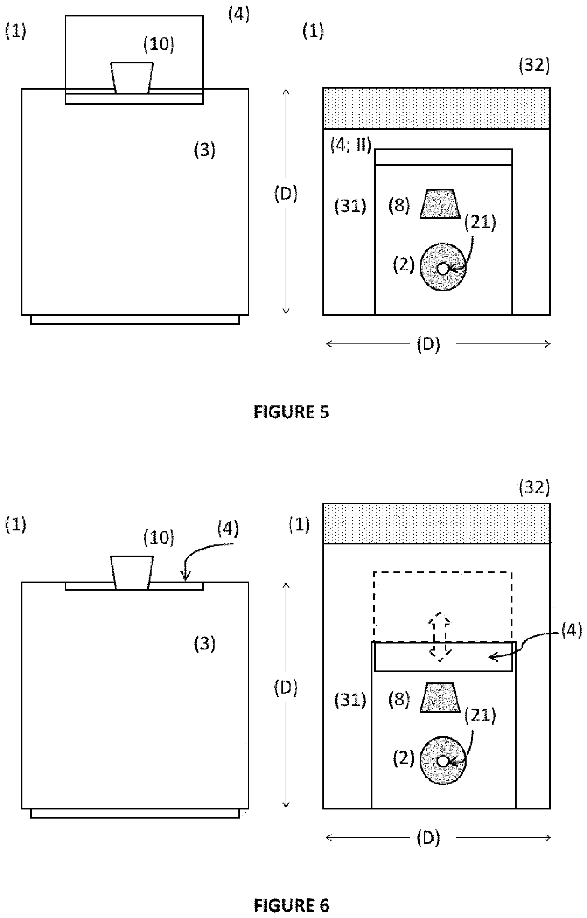

The access disposition (4) can be actuated, for example by mechanical actuation means triggered by a pressure gesture thereupon, in a rotation movement between a closed position - Figure 3 - and an open position (II) - Figure 5 - where provides access to the recipient placement disposition (2), product discharge (21) and introduction passageway (8) of portions adapted for introduction of a portion (7) of edible substance - here not represented -, for example in the form of a capsule.

Alternatively, the access disposition (4) can be actuated in a sliding movement in a plane at least approximately parallel to the plane of said placement disposition (2) - see Figure 6 that represents the access disposition (4) near the open position (II).

It is preferred when the access disposition (4) can occupy at least an intercalary position between the closed (I) and open position (II), for example corresponding to a semi-open position where provides access to the product discharge (21), but not to the introduction passageway (8) of portions.

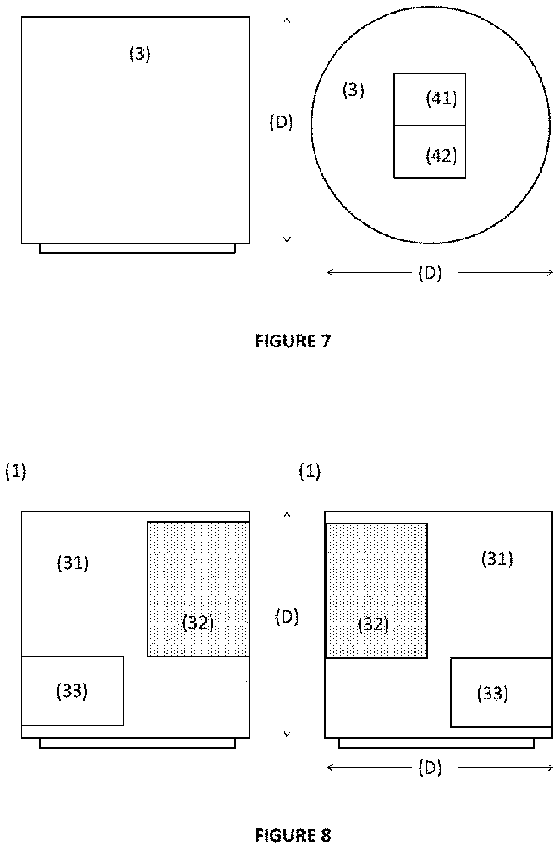

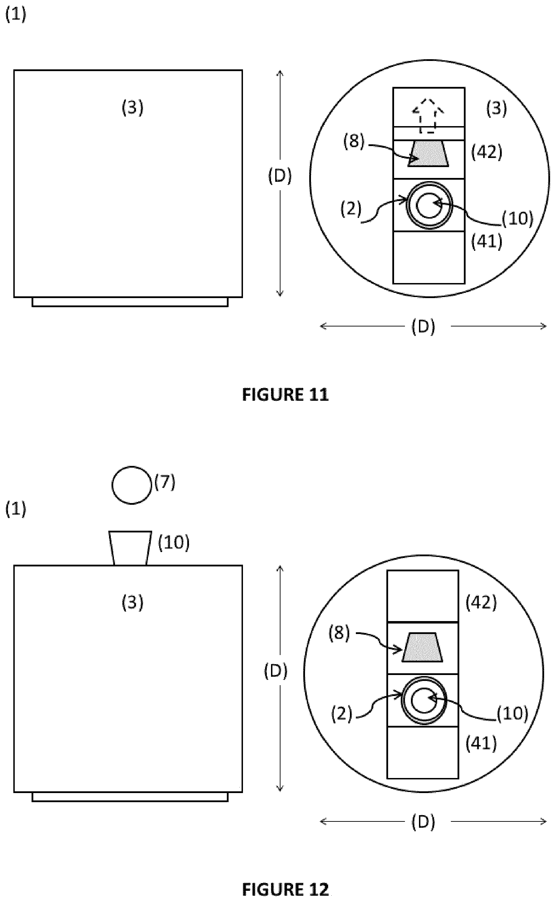

**Figures 7** to **13** represent a second embodiment of a system according to the present invention.

As represented, the apparatus (1) presents in this case an apparatus casing (3) and an access disposition (4) that jointly define, at least substantially, the volume geometry of the apparatus (1), in particular in a coherent geometry that in this case corresponds at least approximately to a cylinder.

It is preferred when, as represented in Figure 8, the apparatus casing (3) includes parts of casing (32, 33) associated to fluid collection means (32) and residues collection means (33).

The access disposition (4) in this case comprises two access parts (41, 42) that can be actuated separately, thereby providing access to the placement disposition (2) and product discharge (21), and to the introduction passage (8) of portions.

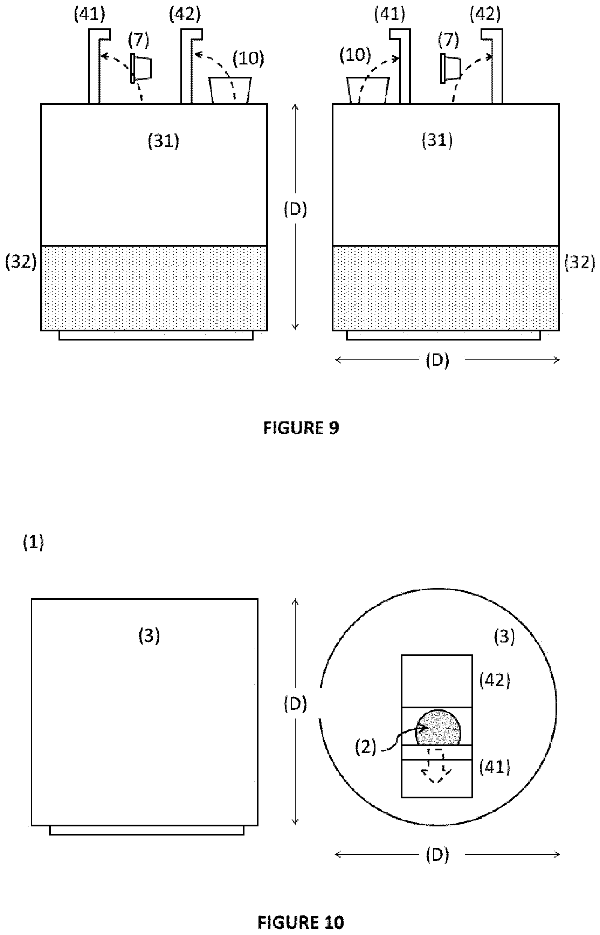

As represented in Figure 9, the actuation movement of said access parts (41, 42) can be a rotation movement and can develop in a plane different from the apparatus casing (3).

Alternatively, as represented in Figures 10 to 13, the actuation movement of the two access parts (41, 42) can be a sliding movement and develop in a plane at least approximately parallel to the plane of the apparatus casing (3).

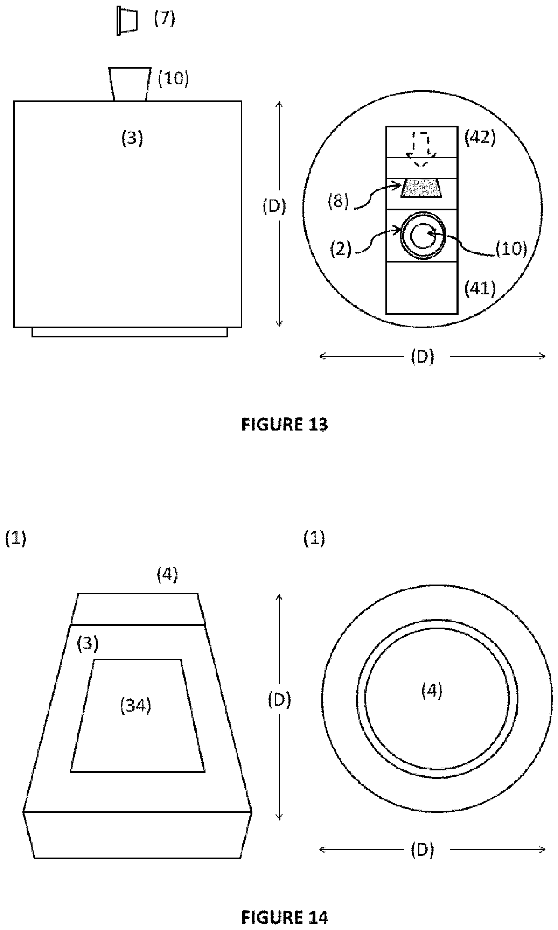

**Figures 14** to **18** present embodiments of apparatus (1) according to the present invention, whereby the apparatus casing (3) and the access disposition (4) jointly define a coherent geometry, such as for example a cone frustum, or a composition of coherent geometries, such as for example several cone frustums.

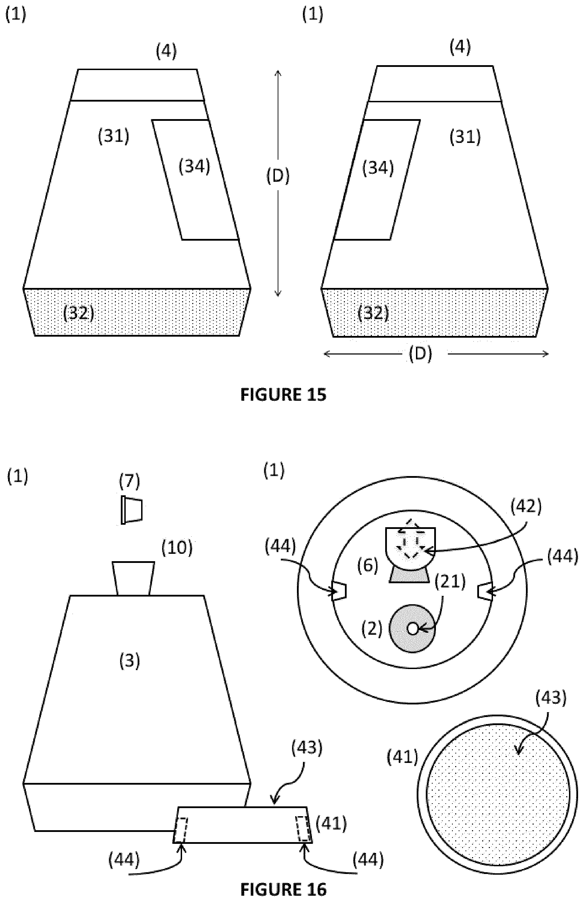

It is particularly preferred when the apparatus casing (3) and the access disposition (4) jointly define a coherent geometry, or a set of at most three, preferentially at most two coherent geometries, for example two cone frustums, as represented in Figures 16 to 18.

Moreover, it is particularly preferred when the access disposition (4) extends over the entire top part of the apparatus, thereby defining the coherent geometry of the apparatus (1).

The access disposition (4) can be provided as a lid adapted so that can be retained and removed from the top region of the apparatus casing (3).

The apparatus casing (3) can present a use interface (34) adapted for providing at least one of: manipulation, portability, energy, information display, as can be observed in Figure 15.

Moreover, the apparatus casing (3) and the access disposition (4) can present at least two regions with materials of different optical transmission properties, including opaque, transparent, semi-transparent or different degrees thereof, whereby it is preferred when the apparatus casing (3) presents at most two different materials, particularly preferentially only one type of material.

As represented in Figure 16, at least one of the apparatus casing (3) and access disposition (4) can further present functional connection means (44) adapted so as to provide apprehension of at least one of: closed condition (I) and open condition (II) of said access disposition (4). It is advantageous when they provide an indication that is perceptible by the user of a correct closed condition of the access disposition (4). This input can be further used for regulation of a cycle of preparation of edible product, and other operations of the apparatus (1).

The access disposition (4) can, as further represented in Figure 16, present a first access part (41) in a lid shape and adapted so that can provide access to the placement disposition (2) and that can cover a second access part (42) that provides discriminated access to the introduction passageway (8) of portions.

The access disposition (4) can further comprise a use interface (43) that can be an information interface, an energy interface, or a manipulation interface.

The information interface can be of screen type, including of interactive screen type by touch screen.

The energy interface can be a heating surface for preheating of recipients (10).

The manipulation interface can further be a handle adapted so that the apparatus (1) can be carried by hand.

The access disposition (4) can present functional connection means (44), in this case in the form of contact detection means, so as to provide input relating to the placement thereof, or not.

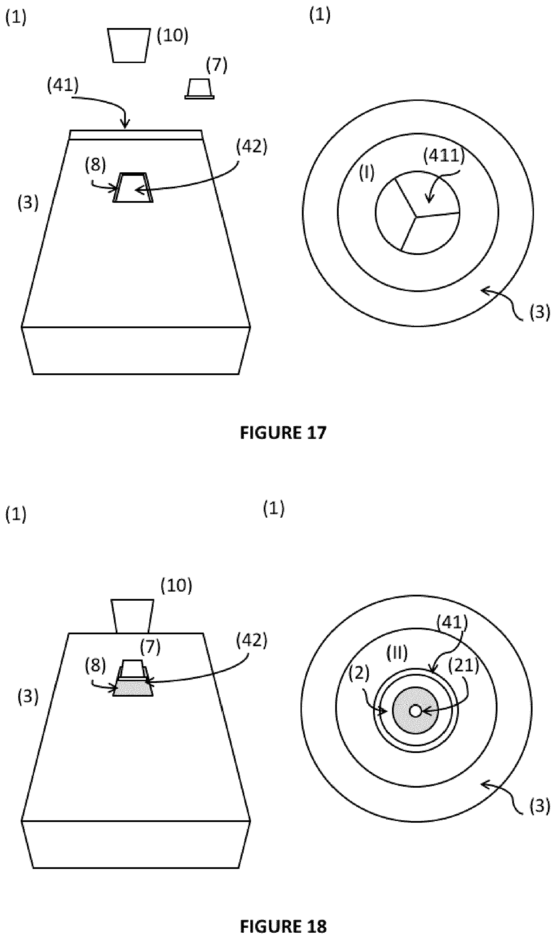

**Figures 17** and **18** represent an embodiment whereby the apparatus (1) presents an access disposition (4) with a first access part (41) that provides covertures of the placement disposition (2) on the top region of the apparatus (1), and a second access part (42) associated to an introduction passageway (8) for portions disposed in a lateral region of the apparatus casing (3).

Said first access part (41) is provided as a mechanism of diaphragm type that can be actuated between a closed position (I) and an open position (II), and vice-versa.

Said second access part (42) can be provided as a lid that can be pushed inwards by a portion (7) of edible substance, for example by swivelling around an axis developing on a top edge of the second access part (42), and automatically recovering the initial position thereafter.

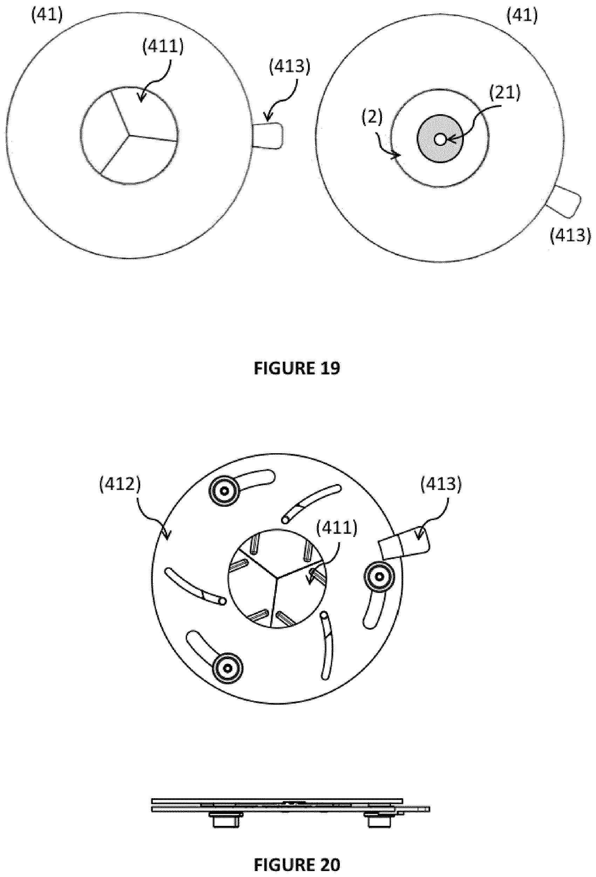

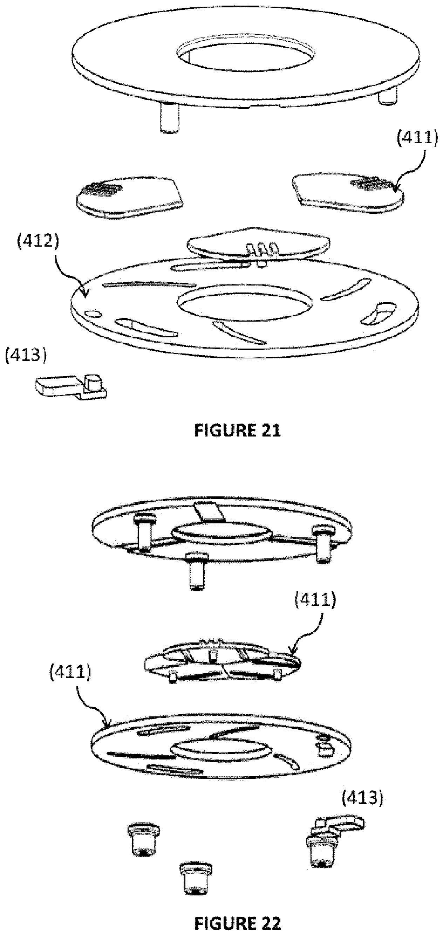

**Figures 19** to **22** represent details of the preferred embodiment of access disposition (4) represented in Figures 17 and 18.

As referred, it is a mechanism of diaphragm type comprising a plurality of access parts (411) adapted so that can be moved in coordinated manner between a closed position (I) and an open position (II), and vice-versa. It is preferred when said access disposition (4) in this case presents three access parts (411) provided so that can engage in a support part (412) thereof. In particular, said support part (412) can be moved in rotation around a central axis thereof and along guideways associated with elements provided stationary, and the access parts (411) engage in mobile manner along guideways configured in the support part (4112) so as to enable the individual coordinated movement of all said access parts (411) as a result of said rotation movement by the support part (412).

The access parts (411) can be actuated manually, such as for example in the represented case by means of a handle (413) associated with the support part (412), or mechanically.

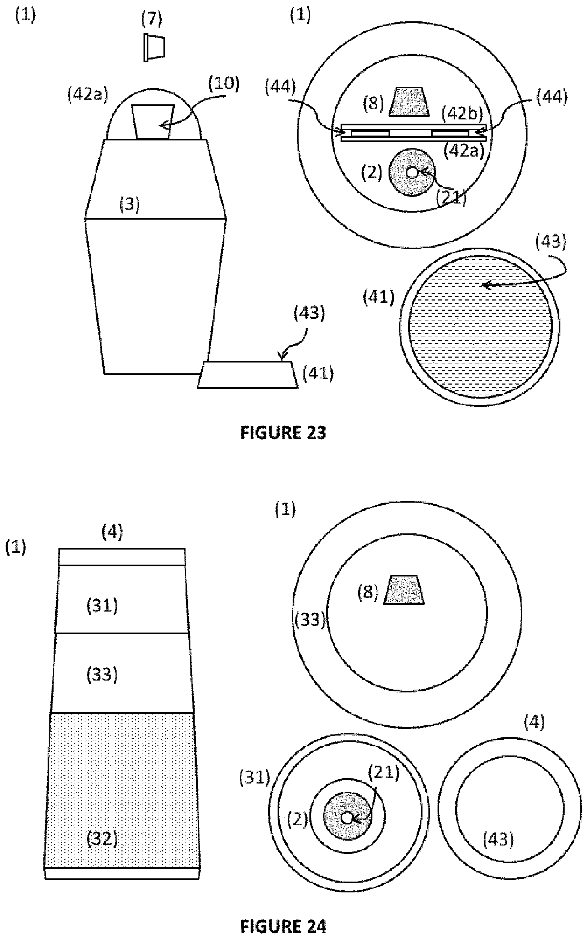

As represented in **Figure 23****,** the access disposition (4) can present functional connection means (44), in the represented case in the form of simple common rotation axis to both access parts, adapted so as to provide actuation, for example by manual or mechanical means, of at least part of the access disposition (4) between respective closed position (I) and open condition (II) .

The access disposition (4) can, as further represented in Figure 23, present a first access part (41) in form of lid and adapted so that can cover a second access part (42a, 42b) that on its turn provides discriminated access to the placement disposition (2) and introduction passageway (8) of portions.

As represented in **Figure 24****,** the access disposition (4) can be configured so that provides coverture of the recipient placement disposition (2) including in case that a drinking recipient (10) is placed on said placement disposition (2).

Moreover, the apparatus (1) presents an apparatus casing (3) that comprises a plurality of casing parts (31, 32, 33) that confine different elements of the apparatus (1) and adapted so that can be retained in removable manner between each other.

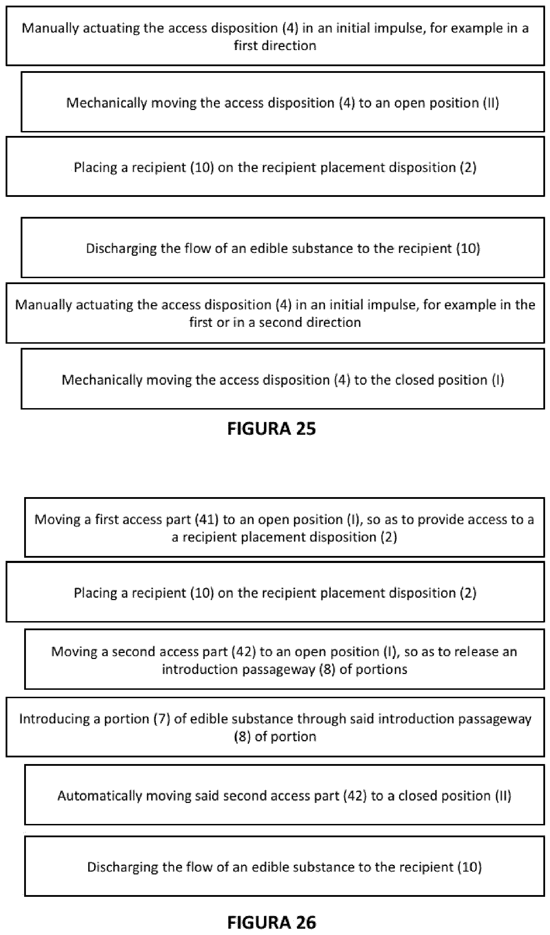

As represented in **Figures 25** and **26****,** the access disposition (4) can be actuated manually, by means of an initial impulse in a first direction that triggers its movement mechanically into an open position (II), and again by means of a manual impulse in the opposite direction that triggers the mechanical movement back to the closed position (I).

Alternatively, at least one of said movements can be triggered by another input. The closing movement can be triggered by the removal of a first recipient (10), and non-placement of a second recipient on the placement disposition (2) during a previously defined period of time.

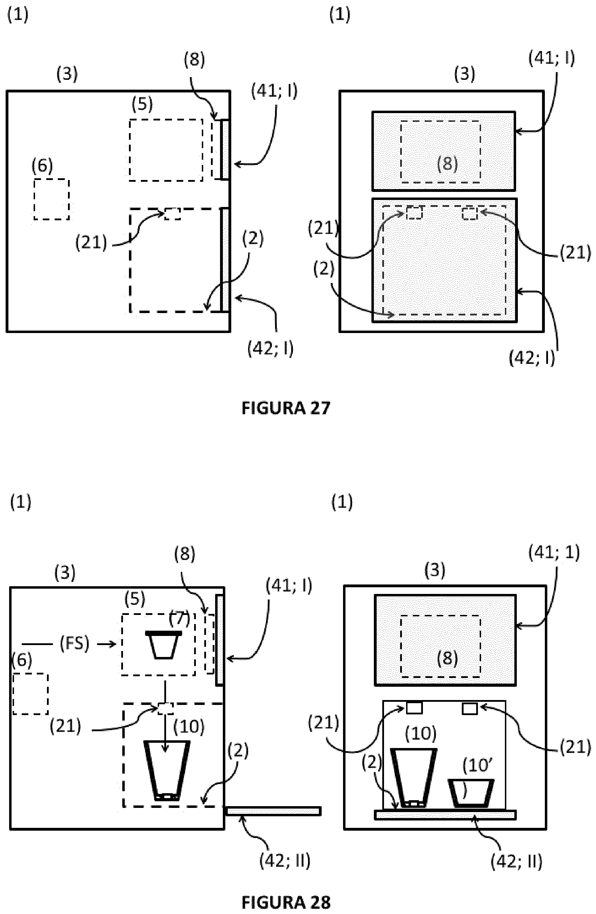

**Figures 27** and **28** represent another preferred embodiment of system according to the invention, whereby in this case the product discharge 21) is disposed above of the placement disposition (2), and comprising a first and second access part (41, 42) adapted so that provide discriminated selective access to said placement disposition (2), including associated product discharge (21), and to said introduction passageway (8) of portions.

Alternatively, the access disposition (4) could further be provided in the form of a lid that can cover the whole frontal part of the apparatus (1).

It is preferred when the access disposition (41, 42), in case of being placed in a closed position (I) as represented in Figure 27, configures at least approximately a regular geometry together with the apparatus casing (3), for example a cube, and thereby provides an envelope devoid of projections or cavities.

## Claims

1. System for distribution of edible products,
said system including an apparatus (1) for distribution of edible products, for example for preparation of beverages based upon an edible substance,
said apparatus (1) presenting a placement disposition (2) adapted so that provides support for placement of at least one type of recipient (10, 10') for collection of said edible product, for example a drinking recipient, and associated with a beverage discharge (21), in particular provided so that the edible product can be discharged along a direction opposite to the gravity force, and
said apparatus (1) can further present an apparatus casing (3) that provides part of the exterior envelope, visible by a user, of said apparatus (1),
**characterized**
**in that** said apparatus (1) presents an access disposition (4) adapted so that can be selectively disposed in a closed position (I) and thereby cover the product discharge (21).

2. System according to claim 1, **characterized**
**in that** said access disposition (4) is adapted so that provides selective access at least to the product discharge (21), preferentially also to the totality of the placement disposition (2), whereby said access disposition (4) can thereby completely confine a space defined by said recipient placement disposition (2) relative to the exterior of the apparatus (1) in case said access disposition (4) is at the closed position (I), and
**in that** said access disposition (4) is adapted so that provides placing a recipient (10, 10') upon respective product discharge (21) in case said access disposition (4) is not at the closed position (I), in particular is at an open position (II) .

3. System according to claim 1 or 2, **characterized in that** said access disposition (4) is adapted, in particular operatively associated to the apparatus casing (3), so that can be operated between:
- a closed position (I), or of retention, where confines the product discharge (21), optionally also the placement disposition (2), relative to the exterior of the apparatus (1), preferentially at least in case the recipient (10, 10') is not placed hereon, and
- at least one open position (II), or of removal, where enables access to the product discharge (21), optionally also to the remaining placement disposition (2), for operative placement of the recipient (10, 10') hereon, in particular on the product discharge (21).

4. System according to any one of claims 1 to 3, **characterized in that** said access disposition (4) further provides selective access to an introduction passage (8) adapted for introduction of portions (7) of edible substance, preferentially disposed in a plane similar to the plane where said placement disposition (2) is disposed, so that in case at the closed position (I), said access disposition (4) can also cover the introduction passageway (8) relative to the exterior.

5. System according to any one of claims 1 to 4, **characterized in that** said access disposition (4) provides selective access in separate manner to the product discharge (21) and to said introduction passageway (8), whereby said introduction passageway (8) is preferentially also associated to the placement disposition (2).

6. System according to any one of claims 1 to 5, **characterized in that** said access disposition (4) presents a first and second access parts (41, 42), whereby a first access part (41) confines and provides access at least to said placement disposition (2), including product discharge (21), and a second access part (42) provides selective access to an introduction passageway (8), and
**in that** said first and second access parts (41, 42) are adapted so that the opening of at least one thereof is only provided in case of indication of operative opening of the other, preferentially at least the opening of said second access part (42) to the introduction passageway (8) of portions, is provided only in case the recipient (10, 10') is operatively placed on said placement disposition (2).

7. System according to any one of claims 1 to 6, **characterized in that** said access disposition (4) is provided so that can be actuated in manual and/or mechanic manner, whereby said access disposition (4) can preferentially be retained in removable manner on said closed position (I), and
**in that** the actuation mechanism of said first and second access parts (41, 42) is provided as at least one of: similar, common, and different.

8. System according to any one of claims 1 to 7, **characterized in that** at least part of said access disposition (4; 41, 42) is adapted so that can be actuated, for example by electromechanical means, in a movement triggered by automatic detection of at least one of:
- proximity of a recipient (10) relative to said access disposition (4), in particular in a spatial field of detection that develops in the projection of the access disposition (4);
- action of manual pressure upon the access disposition (4);
- at least one of gesture command and voice command, by means of a respective user interface,
whereby it is preferred when said automatic detection only triggers the actuation of the opening movement from said closed position (I), and the actuation of the closing movement from an open position (II) is triggered by at least one of:
- previously defined operation event of said apparatus (1),
- automatic counting of previously define period of time after a previously defined operation event of said apparatus (1).

9. System according to any one of claims 1 to 8, **characterized in that** said access disposition (4; 41, 42) is adapted so that can be actuated in a movement between a closed (I) and open (II) position thereof, and vice-versa, whereby said movement corresponds to at least one of: a rotation movement and a translation movement of at least part of the access disposition (4; 41, 42), whereby at least part of said movement is carried out in at least one of: a different plane and plane at least approximately parallel to the plane where the placement disposition (2) extends, and whereby said movement further corresponds to at least one of: to the movement of a single piece, to the movement of a first access part (41) and at least a second access part (42), preferentially in coordinated manner between each other, to the articulated movement of a plurality of parts, for example of diaphragm type.

10. System according to any one of claims 1 to 9, **characterized in that** said access disposition (4) is provided with a general shape of lid, hood or similar type, door, window or similar, for example of planar type, and as a single piece or as a plurality of pieces, and
**In that** said access disposition (4) is adapted as at least one of:
- does not extend completely above, preferentially extends completely surround sideways by the apparatus casing (3) in case in a closed position (I),
- extends completely above the apparatus casing (3) in case in a closed position (I);
- extends in at least most part, preferentially in the entire top region of said apparatus (1).

11. System according to any one of claims 1 to 10, **characterized**
**in that** said access disposition (4) does not present any cavity, projection or opening, and
**in that** said access disposition (4) is provided with at least one of: total dimension and dimension of the actuation space that corresponds to at least half, preferentially more than half, particularly preferentially at least approximately the width of at least one of: the top region and the frontal region of said apparatus casing (3).

12. System according to any one of claims 1 to 11, **characterized**
**in that** in case the access disposition (4) is at the closed position (I), access disposition (4) and the apparatus casing (3) jointly define an exterior envelope with an Euclidian geometric shape, whereby said geometric shape preferentially corresponds to at least one of:
- at least most part, preferentially the totality of the exterior top surface of the apparatus (1), including in case the top surface is the only exterior surface of the apparatus (1) visible to a user,
- at least most part, preferentially the totality of the exterior surface of the apparatus (1) visible to a user,
- a volume of apparatus (1) that corresponds to a coherent geometric shape, including shape of regular geometry, association of shapes of regular geometry, or part of at least one shape of regular geometry, and
- a volume of apparatus (1) devoid of protuberances and cavities associated with the edible product discharge (21), and without any product discharge (21) exposed to the exterior of said apparatus (1), at least in the top, frontal and posterior portions of the exterior envelope thereof,
whereby said apparatus casing (3) and access disposition (4) jointly provide at least most part of the material exterior envelope of said apparatus (1), and jointly configure at least approximately the exterior volumetric shape of said apparatus (1) that preferentially corresponds to at least part of a coherent geometry, or to a set of at least part of coherent geometries.

13. System according to any one of claims 1 to 12, **characterized**
**in that** the access disposition (4) and apparatus casing (3) jointly define a materially continuous surface along at least most part of the extension of the exterior surface at least of the top, frontal and posterior portions of the exterior envelope of said apparatus (1), preferentially also of the lateral portions thereof, with exception of interface regions, for example of slot type, such as for example of at least one of:
- between said access disposition (4) and the apparatus casing (3), including a first casing part (31) of the apparatus casing (3), and
- between optionally actionable second and third casing parts (32, 33) of apparatus casing (3) and the apparatus casing (3),
whereby said second casing part (32) is preferentially provided as a preparation fluid reservoir, for example water or milk, of said apparatus (1), and said third casing part (33) is preferentially provided as a collection casing of residues of said apparatus (1).

14. System according to any one of claims 1 to 13, **characterized**
**in that** the apparatus casing (3) comprises a first casing part (31) provided at least in a neighbouring region of, and preferentially adjacent to the access disposition (4) in the closed position (I), and so that configure a common plane of exterior surface at least in the common vicinity region, and in that at least one of apparatus casing (3) and access disposition (4) present a first and a second actionable parts (32, 33; 41, 42) configured so that can be moved with relation to the first apparatus casing part (31), whereby the actuation of at least one of said first and second actionable parts (32, 33; 41, 42) can be carried out in at least one of: in joint manner with, and in autonomous manner relative to the other actionable part.

15. System according to any one of claims 1 to 14, **characterized**
**in that** at least one of apparatus casing (3) and access disposition (4), further presents at least one respective use interface (34, 43) adapted for providing at least one of: manipulation, portability, energy, information display, whereby said use interface (34, 44) is preferentially configured so that can be swivelled down and thereby confined in the reference surface and/or volume of the apparatus (1) defined by the apparatus casing (3) and access disposition (4) .

16. System according to any one of claims 1 to 15, **characterized**
**in that** at least one of apparatus casing (3) and access disposition (4), further presents functional connection means (44) adapted so as to provide at least one of:
- actuation of the access disposition (4) with relation to at least one of: apparatus casing (3) and other part of the access disposition (4), and
- apprehension of at least one of: closed condition (I) and open condition (II) of the access disposition (4).
